# EUROPEAN PATENT SPECIFICATION

(11) **EP 1 793 998 B1**
(45) Date of publication and mention of the grant of the patent: **16.04.2008**
(21) Application number: 05794359.9
(22) Date of filing: 06.09.2005
(51) Int. Cl.: B32B 27/32, C08L 23/06, B60J 10/00

(54) **SLIP-COAT COMPOSITIONS AND POLYMERIC LAMINATES**
GLEITBESCHICHTUNGSZUSAMMENSETZUNGEN UND POLYMERLAMINATE
COMPOSITIONS DE REVÊTEMENT ANTIDÉRAPANT ET PRODUITS STRATIFIÉS POLYMÈRES

(30) Priority: 15.09.2004 US 943307; 12.11.2004 US 987943
(43) Date of publication of application: 13.06.2007
(73) Proprietor: Advanced Elastomer Systems, L.P., Akron, OH 44311-1059 (US)
(72) Inventor: JACOB, Sunny, Akron, OH 44313 (US)
(74) Representative: Veldhuizen, Albert Dirk Willem
(86) International application number: PCT/US2005/031606
(87) International publication number: WO 2006/033819

(56) References cited:
- US-A- 5 110 685

## Description

### FIELD OF THE INVENTION

This invention relates to slip-coat compositions and polymeric laminates and weather seals that include these compositions.

### BACKGROUND OF THE INVENTION

Window channels are commonly employed to mate glass to a window frame. These window channels are typically soft, resilient materials that provide structural integrity and often advantageously provide an environmental or acoustical seal. As a result, many window channels are referred to as weather seals.

In certain uses, such as in automobiles and the like, the weather seal also provides a surface against which a retractable window can slide and seal. In addition to providing an adequate seal, it is desirable that the weather seal is abrasion resistant and demonstrates a low coefficient friction.

In one instance, window channels are enhanced with a slip coat that may include a polymeric film or layer that is applied over a substrate layer, which is typically a rubbery material. For example, U.S. Patent No. 5,447,671 teaches a weather seal that includes a contacting layer applied to a substrate. The substrate comprises a resilient and flexible synthetic resin or synthetic rubber, and the contacting layer may include a blend of high molecular weight polyethylene (300,000 g/mol) and ultra-high molecular weight polyethylene (1,300,000 g/mol). This patent suggests that the distinct polyethylene resins result in a rough contacting surface, which ostensibly is believed to reduce friction.

In order to overcome disadvantages that may be associated with the use of ultra-high molecular weight resins, such as ultra-high molecular weight polyethylenes, U.S. Patent No. 6,146,739 teaches a glass-run channel that includes a contact part that includes a substrate layer and a slide-resin layer. The substrate layer includes a thermoplastic elastomer (e.g., a blend of a rubber and thermoplastic resin), and the slide-resin layer includes an ultra-high molecular weight polyolefin having an intrinsic viscosity of 7 to 40 dl/g as measured in a solvent at 135°C decalin (which is assumed to include polymers having a weight average molecular weight in excess of about 400,000 g/mol, where the equivalency is based upon an empirical assessment of a range of polymers), a polyolefin having an intrinsic viscosity of 0.1 to 5 dl/g as measured in a solvent at 135°C decalin, and a thermoplastic elastomer that includes a rubber and a thermoplastic resin.
US 5 110 685 (see column 1 line 65 to column 3 line 2 and column 3 line 64 to column 5 line 30) discloses low friction, abrasion resistent coatings of thermoplastic HDPE blends blended with elastomers such as ethylene-propylene rubbers. However there is no reference to inclusion of a dynamically vulcanized rubber.

Despite advancements that have been made thus far in the art, there remains a need to improve weather seals and particularly the slip coatings of the weather seals. In particular, there remains a need to improve the coefficient of friction of these slip coatings as well as the surface characteristics of these coatings such as their appearance.

### SUMMARY OF THE INVENTION

In general the present invention provides a polymeric laminate comprising (A) a substrate, and (B) a slip layer covering at least a portion of said substrate, where the slip layer consists essentially of (i) a polyethylene blend, where said blend includes (a) from 3 to 97 percent by weight, based upon the total weight of said blend, of a first polyethylene resin having a weight average molecular weight from 110,000 to 140,000 and a polydispersity of less than 12, (b) from 3 to 97 percent by weight, based upon the total weight of said blend, of a second polyethylene resin having a weight average molecular weight from 50,000 up to 109,999 and a polydispersity of less than 12, and (c) from 0 to 40 percent by weight, based upon the total weight of said blend, of a third polyethylene resin having a weight average molecular weight from 20,000 up to 49,999 and polydispersity of less than 12, with the proviso that said blend includes at least 60 percent, based upon the total weight of said blend, of said first polyethylene and said second polyethylene combined, (ii) from 2.5 to 15 parts by weight, per 100 parts by weight of said polyethylene blend, of a propylene polymer or copolymer having propylene units deriving from propylene monomer, and (iii) from 4.5 to 20 parts by weight, per 100 parts by weight of said polyethylene blend, of a dynamically vulcanized rubber.

The present invention also includes a process for manufacturing a laminate, the process comprising (I) providing a thermoprocessable composition for forming a substrate (II) preparing a thermoprocessable composition for forming a slip coat by (a) dynamically vulcanizing a rubber within a blend that includes the rubber and' a propylene polymer or copolymer to form a thermoplastic vulcanizate, and (b) adding, after said step of dynamically vulcanizing the rubber, a blend of polyethylene resins to the thermoplastic vulcanizates, where the polyethylene resin blend consists essentially of (i) from 3 to 97 percent by weight, based upon the total weight of said blend, of a first polyethylene resin having a weight average molecular weight of from 110,000 to 140,000 and a polydispersity of less than 12, (ii) from 3 to 97 percent by weight, based upon the total weight of said blend, of a second polyethylene resin having a weight average molecular weight of from 50,000 up to 109,999 and a polydispersity of less than 12, and (iii) from 0 to 40 percent by weight, based upon the total weight of said blend, of a third polyethylene resin having a weight average molecular weight of from 20,000 up to 49,999 and polydispersity of less than 12, with the proviso that said blend includes at least 60 percent, based upon the total weight of said blend, of said first polyethylene and said second polyethylene combined, (III) coextruding the composition for forming the substrate and the composition for forming the slip coat, thereby forming a laminate including a substrate and a slip coat covering at least a portion of the substrate.

The present invention further includes a slip coat composition consisting essentially of (i) a polyethylene blend including (a) from 3 to 97 percent by weight, based upon the total weight of said blend, of a first polyethylene resin having a weight average molecular weight of from 110,000 to 140,000 and a polydispersity of less than 12, (b) from 3 to 97 percent by weight, based upon the total weight of said blend, of a second polyethylene resin having a weight average molecular weight of from 50,000 up to 109,999 and a polydispersity of less than 12, and (c) from to 40 percent by weight, based upon the total weight of said blend, of a third polyethylene resin having a weight average molecular weight of from 20,000 up to 49,999 and polydispersity of less than 12, with the proviso that said blend includes at least 60 percent, based upon the total weight of said blend, of said first polyethylene and said second polyethylene combined, (ii) a propylene polymer or copolymer, and (iii) a dynamically-vulcanized rubber.

### BRIEF DESCRIPTION OF THE DRAWINGS

FIG. 1 is a vertical cross-section illustrating a co-extruded weatherseal such as is conventionally used in the upper portion of a window provided in a vehicle's door and within which weatherseal the upper portion of the window's glass is sealingly held.

FIG. 2 is a vertical cross-section illustrating a co-extruded weatherseal such as is conventionally used in the lower portion of a window provided in a vehicle's door and within which weatherseal the lower portion of the window's glass is sealingly held when the glass is either raised or lowered.

FIG. 3 is a vertical cross-section illustrating another co-extruded weatherseal such as is conventionally used on either side of a window provided in a vehicle's door and in which weatherseal the side edges of the window's glass is sealingly held and reciprocated.

### DETAILED DESCRIPTION OF ILLUSTRATIVE EMBODIMENTS

Laminates of the present invention include a first polymer layer and a second polymer layer. The first polymer layer has a relatively low coefficient of friction. In one embodiment, the laminate forms at least a portion of a weather seal with the first layer forming a slip coat and the second layer forming a substrate on to which the slip is disposed.

The first layer, which may also be referred to as the slip coat or slide layer, includes (i) a polyethylene resin blend including (a) a first polyethylene resin, (b) a second polyethylene resin, and (c) a third polyethylene resin, (ii) a propylene polymer or copolymer, and (iii) a dynamically-vulcanized rubber. While other conventional additives may be included, the slip coat is preferably devoid of ultrahigh molecular weight polyolefins including polyethylene resins that have an intrinsic viscosity in excess of 6 and more preferably in excess of 7 or a number average molecular weight in excess of 500,000 and more preferably in excess of 600,000.

In preferred embodiments, the slip coat or slide layer consists essentially of (i) a polyethylene resin blend including (a) a first polyethylene resin, (b) a second polyethylene resin, and (c) a third polyethylene resin, (ii) a propylene polymer or copolymer, and (iii) a dynamically-vulcanized rubber. Other constituents that may be present in the slip coat include optional fillers, slip aids, oils, processing additives, pigments, low-density polyethylene, and stability-enhancing agents. The phrase "consisting essentially of" limits the scope of constituents within the slip coat composition to those constituents that are' specified and those that do not materially affect the basic and novel characteristics of the composition. Particularly excluded by use of this expression are those ultrahigh molecular weight polyolefins, particularly polyethylene. These resins have been found to initiate or create a propensity for stress whitening or creasing.

The rubber employed to form the dynamically-vulcanized rubber is not limited to any one particular rubber. Rubber refers to rubbery polymers or those polymers that exhibit a glass transition temperature (T_{g}) of less than 0°C, preferably less than -20°C, and even more preferably less than -65°C that are able to undergo dynamic vulcanization.

Useful rubbery polymers preferably contain some degree of unsaturation. Examples of rubbery polymers include olefinic elastomeric copolymers, butyl rubber, natural rubber, styrene-butadiene copolymer rubber, butadiene rubber, acrylonitrile rubber, halogenated rubber such as brominated and chlorinated isobutylene-isoprene copolymer rubber, butadiene-styrene-vinyl pyridine rubber, urethane rubber, polyisoprene rubber, epichlolorohydrin terpolymer rubber, and polychloroprene.

The term olefinic elastomeric copolymer refers to rubbery copolymers polymerized from ethylene, at least one α-olefin monomer, and optionally at least one diene monomer. The α-olefins may include, but are not limited to, propylene, 1-butene, 1-hexene, 4-methyl-1 pentene, 1-octene, 1-decene, or combinations thereof. The preferred α-olefins are propylene, 1-hexene, 1-octene or combinations thereof. The diene monomers may include, but are not limited to, 5-ethylidene-2-norbornene; 1,4-hexadiene; 5-methylene-2-norbornene; 1,6-octadiene; 5-methyl-1,4-hexadiene; 5-vinyl-2-norbornene; 3,7-dimethyl-1,6-octadiene; 1,3-cyclopentadiene; 1,4-cyclohexadiene; dicyclopentadiene; or a combination thereof. In the event that the copolymer is prepared from ethylene, α-olefin, and diene monomers, the copolymer may be referred to as a terpolymer or even a tetrapolymer in the event that multiple α-olefins or dienes are used.

The preferred olefinic elastomeric copolymers include from 45 to 85 by weight, more preferably from 55 to 75% by weight, still more preferably from 60 to 70% by weight, and even more preferably from 61 to 66% by weight ethylene units deriving from ethylene monomer, and from 0 to 15% by weight, more preferably from 0.5 to 12% by weight, still more preferably from 1 to 10% by weight, and even more preferably from 2 to 8% by weight diene units deriving from diene monomer, with the balance including α-olefin units (preferably propylene) deriving from α-olefin monomer. Expressed in mole percent, the preferred terpolymer preferably includes from 0.1 to 5 mole percent, more preferably from 0.5 to 4 mole percent, and even more preferably from 1 to 2.5 mole percent diene units deriving from diene monomer.

The preferred olefinic elastomeric copolymers have a weight average molecular weight (M_{w}) that is preferably greater than 50,000, more preferably greater than 100,000, even more preferably greater than 200,000, and still more preferably greater than 300,000; and the weight average molecular weight of the preferred olefinic elastomeric copolymers is preferably less than 1,200,000, more preferably less than 1,000,000, still more preferably less than 900,000, and even more preferably less than 800,000. The preferred olefinic elastomeric copolymers have a number average molecular weight (Mₙ) that is preferably greater than 20,000, more preferably greater than 60,000, even more preferably greater than 100,000, and still more preferably greater than 150,000; and the number average molecular weight of the preferred olefinic elastomeric copolymers is preferably less than 500,000, more preferably less than 400,000, still more preferably less than 300,000, and even more preferably less than 250,000.

The preferred olefinic elastomeric copolymers may also be characterized by having a pre-vulcanized Mooney viscosity (ML₍₁₊₄₎ at 125°C), per ASTM D 1646, of from 50 to 500 and preferably from 75 to 450. Where higher molecular weight olefinic elastomeric copolymers are employed within the thermoplastic vulcanizates of this invention, these high molecular weight polymers may be obtained in an oil-extended form. These oil-extended copolymers typically include from 15 to 100 parts by weight, per 100 parts by weight rubber, of a paraffinic oil. The Mooney viscosity of these oil-extended copolymers is from 45 to 80 and preferably from 50 to 70.

Useful olefinic elastomeric copolymers may be manufactured or synthesized by using a variety of techniques. For example, these copolymers can be synthesized by employing solution, slurry, or gas phase polymerization techniques that employ numerous catalyst systems including Ziegler-Natta systems; single-site catalysts, and Brookhart catalysts.

Olefinic elastomeric copolymers are commercially available under the tradenames Vistalon™ (ExxonMobil Chemical Co.; Houston, Texas), Keltan™ (DSM Copolymers; Baton Rouge, Louisiana), Nordel™ IP (DuPont Dow Elastomers; Delaware), NORDEL MG™ (DuPont Dow Elastomers), and Buna™ (Bayer Corp.; Germany).

The rubber is cured by employing dynamic vulcanization techniques. Dynamic vulcanization refers to a vulcanization or curing process for a rubber contained in a blend that includes the rubber and at least one thermoplastic resin. The rubber is vulcanized under conditions of shear and extension at a temperature at or above the melting point of the thermoplastic resin. The rubber is preferably simultaneously crosslinked and dispersed (preferably as fine particles) within the thermoplastic resin matrix, although other morphologies, such as co-continuous morphologies, may exist depending on the degree of cure, the rubber to plastic viscosity ratio, the intensity of mixing, the residence time, and the temperature.

After dynamic vulcanization, and preferably after addition of the polyethylene blend, the rubber is in the form of finely-divided and well-dispersed particles of vulcanized or cured rubber within a continuous thermoplastic phase or matrix, although a co-continuous morphology is' also possible. In those embodiments where the cured rubber is in the form of finely-divided and well-dispersed particles within the thermoplastic medium, the rubber particles typically have an average diameter that is less than 50 µm, preferably less than 30 µm, even more preferably less than 10 µm, still more preferably less than 5 µm and even more preferably less than 1 µm. In preferred embodiments, at least 50%, more preferably at least 60%, and even more preferably at least 75% of the particles have an average diameter of less than 5 µm, more preferably less than 2 µm, and even more preferably less than 1 µm.

The rubber within the slip layer is preferably at least partially cured. In one embodiment, the rubber is advantageously completely or fully cured. The degree of cure can be measured by determining the amount of rubber that is extractable from the thermoplastic vulcanizate by using cyclohexane or boiling xylene as an extractant. Preferably, the rubber has a degree of cure where not more than 15 weight percent, preferably not more than 10 weight percent, more preferably not more than 5 weight percent, and still more preferably, not more than 3 weight percent is extractable by cyclohexane at 23°C as described in U.S Patent Nos. 4,311,628, 5,100,947 and 5,157,081. Alternatively, the rubber has a degree of cure such that the crosslink density is preferably at least 4 x 10⁻⁵, more preferably at least 7 x 10⁻⁵, and still more preferably at least 10 x 10⁻⁵ moles per milliliter of rubber, see Crosslink Densities and Phase Morphologies in Dynamically Vulcanized TPEs, by Ellul et al., Rubber Chemistry and Technology, Vol 68, pp. 573-584 (1995).

Any curative that is capable of curing or crosslinking the rubber may be used in the dynamic vulcanization. For example, silicon-containing curatives can be employed as disclosed in U.S. Patent No. 5,936,028. Also, phenolic resins can be employed as disclosed in U.S. Patent Nos. 2,972,600, 3,287,440, 5,952,452, and 6,437,030. Peroxide curatives may also be employed as disclosed in U.S. Patent No. 5,656,693. Where the rubber is a butyl rubber, useful cure systems are described in U.S. Patent Nos. 5,013,793, 5,100,947, 5,021,500, 5,100,947, 4,978,714, and 4,810,752.

In preferred embodiments, the rubber is cured employing a silicon-containing curative. In certain of these embodiments, the rubber is an elastomeric copolymer that includes 5-vinyl-2-norbornene as the diene component. Useful silicon-containing curatives generally include silicon hydride compounds having at least two SiH groups. These compounds react with carbon-carbon double bonds of unsaturated polymers in the presence of a hydrosilation catalyst. Silicon hydride compounds that are useful in practicing the present invention include, but are not limited to, methylhydrogen polysiloxanes, methylhydrogen dimethylsiloxane copolymers, alkyl methyl polysiloxanes, bis(dimethylsilyl)alkanes, bis(dimethylsilyl)benzene, and mixtures thereof.

Preferred silicon hydride compounds may be defined by the formula 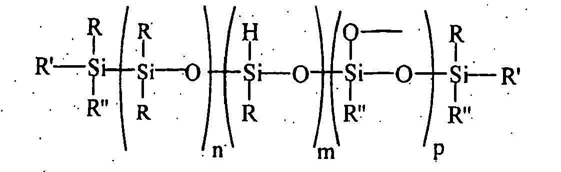 where each R is independently selected from alkyls containing 1 to 20 carbon atoms, cycloalkyls containing 4 to 12 carbon atoms, and aryls, m is an integer having a value ranging from 1 to 50, n is an integer having a value ranging from 1 to 50, and p is an integer having a value ranging from o to 6.

As noted above, hydrosilation curing of the elastomeric polymer is preferably conducted in the presence of a catalyst. These catalysts can include, but are not limited to, peroxide catalysts and catalysts including transition metals of Group VIII. These metals include, but are not limited to, palladium, rhodium, and platinum, as well as complexes of these metals. Platinum catalysts are preferred.

The propylene polymers and copolymer include polypropylene homopolymers and copolymers that are formed by polymerizing propylene with one or more of ethylene, 1-butene, 1-hexene, 1-octene, 2-methyl-1-propene, 3-methyl-1-pentene, 4-methyl-1-pentene, 5-methyl-1-hexene, and mixtures thereof. Specifically included are the reactor, impact, and random copolymers of propylene with ethylene or the higher α-olefins, described above, or with C₁₀-C₂₀ diolefins. Comonomer contents for these propylene copolymers will typically be from 1 to about 30% by weight of the polymer. Blends or mixtures of 2 or more polyolefin thermoplastics such as described herein, or with other polymeric modifiers, are also suitable in accordance with this invention. These homopolymers and copolymers may be synthesized by using any polymerization technique known in the art such as, but not limited to, the Phillips-catalyzed reactions, conventional Ziegler-Natta type polymerizations, and catalysis employing single-site organometallic catalysts including, but not limited to, metallocene catalysts.

The preferred propylene polymers and copolymers have a glass transition temperature (Tg) of from -135 to 110°C, preferably from -100 to 50°C, and even more preferably from -20 to 20°C. They may also be characterized by a melt temperature that is from 50°C to 180°C, preferably from 80 to 180°C, and even more preferably from 120 to 180°C. These resins may also be characterized by having a melt flow rate that is from 0.005 to 750 decigrams per minute (dg/min), preferably from 0.01 to 100 dg/min, and even more preferably from 0.10 to 18 dg/min, where the melt flow rate is a measure of how easily a polymer flows under standard pressure per ASTM D-1238 at 230°C and 2.16 kg load.

Useful propylene polymers and copolymers may also be characterized as semi-crystalline, crystalline, or crystallizable resins. In one embodiment, they have a crystallinity; as measured by differential scanning calorimetry, of from 10 to 80%, preferably from 20 to 70%, and even more preferably from 30 to 65%.

In one embodiment, the propylene polymers and copolymers preferably have a weight average molecular weight (M_{w}) from 200,000 to 700,000, and a number average molecular weight (Mₙ) from 80,000 to 200,000. More preferably, these resins have a M_{w} from 300,000 to 600,000, and a Mn from 90,000 to 150,000.

An especially preferred propylene polymers and copolymers include high-crystallinity isotactic or syndiotactic polypropylene. Preferred polypropylene homopolymers have a density of from 0.85 to 0.91 g/cc, with the largely isotactic polypropylene having a density of from 0.90 to 0.91 g/cc. Also, high molecular weight polypropylene that has a fractional melt flow rate is preferred. These polypropylene resins are characterized by a melt flow rate that is less than or equal to 10 dg/min and more preferably less than or equal to 1.0 dg/min per ASTM D-1238.

The first polyethylene resin includes polymers having substantially all polymeric units deriving from ethylene. Preferably, at least 90%, more preferably at least 95%, and even more preferably at least 99% of the polymeric units derive from ethylene. In one embodiment, the first polyethylene resin is a polyethylene homopolymer.

The first polyethylene resin may be characterized by having the weight average molecular weight of from 110,000 up to 140,000, optionally from 115,000 to 135,000, and optionally from 120,000 to 130,000, as determined by Gel Permeation Chromatography using polystyrene standards. This first polyethylene resin is also preferably characterized by having a polydispersity that is less than 12, optionally less than 11, optionally less than 10, and optionally less than 9.

In certain embodiments, the first polyethylene resin may also be characterized by having a melt index from 1.0 to 12 dg/min, optionally from 2.0 to 10 dg/min, and optionally from 3.0 to 8.0 dg/min, per ASTM D-1238 at 190°C and 21.6 kg load.

In certain embodiments, the first polyethylene resin may also be characterized by having an intrinsic viscosity and determined per ASTM D1601 and D 4020 that is from 2.00 up to 5.00 dl/g, optionally from 2.20 to 4.50 dl/g, and optionally from 2.50 to 4.00 dl/g.

The first polyethylene resin may also be characterized by having a density as measured per ASTM D4883 that is greater than 0.93, g/ml more preferably greater than 0.94 g/cc, and even more preferably greater than 0.95 g/ml.

Polymers useful as the first polyethylene resin are commercially available under the tradename HD7745 (ExxonMobil).

The second polyethylene resin includes polymers having substantially all polymeric units deriving from ethylene. Preferably, at least 90%, more preferably at least 95%, and even more preferably at least 99% of the polymeric units derive from ethylene. In one embodiment, the second polyethylene resin is a polyethylene homopolymer.

The second polyethylene resin may be characterized by having the weight average molecular weight of from 50,000 up to 109,999, optionally from 54,000 to 90,000, and optionally from 58,000 to 70,000. This second polyethylene resin is also preferably characterized by having a polydispersity that is less than 12, optionally less than 11, optionally less than 10, and optionally less than 9.

In certain embodiments, the second polyethylene resin may also be characterized by having a melt index that is from 1.1 up to 14 dg/min, optionally from 1.5 to 13 dg/min, and optionally from 2.0 to about 12 dg/min, per ASTM D-1238 at 190°C and 2.16 kg load.

In certain embodiments, the second polyethylene resin may also be characterized by having an intrinsic viscosity per ASTM D1601 and D 4020 that is from 1.00 up to 1.99 dl/g, optionally from 1.20 to 1.90 dl/g, and optionally from 1.30 to 1.80 dl/g.

The second polyethylene resin may also be characterized by having a density as measured per ASTM D4883 that is greater than 0.93 g/ml, optionally greater than 0.94 g/ml, and optionally greater than 0.95 g/ml.

Polymers useful as the second polyethylene resin are commercially available under the tradename HD6706 (ExxonMobil).

The third polyethylene resin employed in the slip-coat layer includes a polymer having substantially all of its polymeric units deriving from ethylene. Preferably, at least 90%, more preferably at least 95%, and even more preferably at least 99% of the polymeric units derive from ethylene. In one embodiment, the third polyethylene resin is a polyethylene homopolymer.

The third polyethylene resin may be characterized by having the weight average molecular weight of from 20,000 up to 49,999, optionally from 22,000 to 47,000, and optionally from 26,000 to 45,000. This second polyethylene resin is also preferably characterized by having a polydispersity that is less than 12, optionally less than 11, optionally less than 10, and optionally less than 9.

In certain embodiments, the third polyethylene resin may also be characterized by having a melt index that is from 15 up to 50 dg/min, optionally from 18 to 45 dg/min, and optionally from 20 to 40 dg/min, per ASTM D-1238 at 190°C and 2.16 kg load.

In certain embodiments, the third polyethylene resin may also be characterized by having an intrinsic viscosity that is from 0.10 up to 0.99 dl/g, optionally from 0.40 to 0.95 dl/g, and optionally from 0.60 to 0.90 dl/g per ASTM D1601 and D4020.

The third polyethylene resin may also be characterized by having a density as measured per ASTM D4883 that is greater than 0.93 g/ml, more preferably greater than 0.94 g/ml, and even more preferably greater than 0.95 g/ml.

Polymers useful as the third polyethylene resin are commercially available under the tradename HD6733 (ExxonMobil).

Fillers that may optionally be included include those reinforcing and non-reinforcing fillers or extenders that are conventionally employed in the compounding of polymeric materials: Useful fillers include carbon black, calcium carbonate, clays, silica, talc, and titanium dioxide.

Plasticizers, extender oils, synthetic processing oils, or a combination thereof may also be optionally added to the blend. The extender oils may include, but are not limited to, aromatic, naphthenic, and paraffinic extender oils. Exemplary synthetic processing oils are polylinear α-olefins, polybranched α-olefins, and hydrogenated polyalphaolefins. The compositions of this invention may include organic esters, alkyl ethers, or combinations thereof, see U.S. Patent No. 5,290,886 and 5,397,832. The addition of certain low to medium molecular weight organic esters and alkyl ether esters to the compositions of the invention dramatically lowers the T_{g} of the polyolefin and rubber components, and of the overall composition, and improves the low temperatures properties, particularly flexibility and strength. These organic esters and alkyl ether esters generally have a molecular weight that is generally less than 10,000. It is believed that the improved effects are achieved by the partitioning of the ester into both the polyolefin and rubber components of the compositions. Particularly suitable esters include monomeric and oligomeric materials having an average molecular weight below 2000, and preferably below 600. The ester should be compatible, or miscible, with both the polyolefin and rubber components of the composition; i.e. that it mix with the other components to form a single phase. The esters found to be most suitable were either aliphatic mono- or diesters or alternatively oligomeric aliphatic esters or alkyl ether esters. Polymeric aliphatic esters and aromatic esters were found to be significantly less effective, and phosphate esters were for the most part ineffective. Synthetic polyalphaolefins are also useful in lowering T_{g}.

Oligomeric extenders may also optionally be used. Preferred oligomeric extenders include copolymers of isobutylene and butene or copolymers of butadiene together with a complementary comonomer. These oligomeric extenders typically have a number average molecular weight of less than 1,000. Useful oligomeric extenders are commercially available. For example, oligomeric copolymers of isobutylene and butene are available under the tradenames Polybutene™ (Soltex; Houston, Texas), Indopol™ (BP; Great Britain), and Parapol™ (ExxonMobil). Oligomeric copolymers including butadiene are commercially available under the tradename Ricon Resin™ (Ricon Resins, Inc; Grand Junction, Colorado).

Polymeric processing additives may also optionally be added. These processing additives may include polymeric resins that have a very high melt flow index. These polymeric resins include both linear and branched molecules that have a melt flow rate that is greater than 500 dg/min, more preferably greater than 750 dg/min, even more preferably greater than 1000 dg/min, still more preferably greater than 1200 dg/min, and still more preferably greater than 1500 dg/min. Mixtures of various branched or various linear polymeric processing additives, as well as mixtures of both linear and branched polymeric processing additives may be used. The preferred linear polymeric processing additives are polypropylene homopolymers. The preferred branched polymeric processing additives include diene-modified polypropylene polymers. Thermoplastic vulcanizates that include similar processing additives are disclosed in U.S. Patent No. 6,451,915.

Slip aids may optionally be included in the slip-coat layer. Slip aids may include any material that will enhance or lower the coefficient of friction of the slip-coat layer and that preferably does not have a deleterious impact on the composition. Types of slip aids include siloxane polymers, fatty acids, fatty acid triglycerides, fatty acid amides, esters, fluoropolymers, graphite, molybdenum, silica, boron nitride, silicon carbide, and mixtures thereof.

Useful siloxane polymers include dialkyl polysiloxanes and silicone oils. Useful dialkyl polysiloxanes include dimethyl polysiloxane, phenylmethyl polysiloxane, fluorinated polysiloxanes, tetramethyltetraphenyltrisiloxane and the hydroxy-functionalized polysiloxanes thereof. Preferred siloxane polymers include those having a weight average molecular weight of from 200 to 500,000 g/mole, preferably from 10,000 to 400,000 g/mole, and more preferably from 100,000 to 380,000 g/mole.

Useful fatty acids include those obtained from both animal and plant sources, and include both saturated and unsaturated acids. Exemplary saturated fatty acids include butyric acid, lauric acid, palmitic acid, and stearic acid. Exemplary unsaturated fatty acids include oleic acid, linoleic acid, linolenic acid, and palymitoleic acid. Triglycerides of these fatty acids may also be employed.

Exemplary fatty acid amides include lauramide, palmitamide, stearamide and behenamide; unsaturated fatty acid amides such as erucamide, oleamide, brassidamide and elaidamide; and bisfatty acid amides such as methylenebisstearamide, methylenebisoleamide, ethylenebisstearamide and ethylenebisoleamide.

Useful esters include an ester of cetyl alcohol and acetic acid, an ester of cetyl alcohol and propionic acid, an ester of cetyl alcohol and butyric acid, an ester of beef tallow alcohol and acetic acid; an ester of beef tallow alcohol and propionic acid, an ester of beef tallow alcohol and butyric acid, an ester of stearyl alcohol and acetic acid, an ester of stearyl alcohol and propionic acid, an ester of stearyl alcohol and butyric acid, an ester of distearyl alcohol and phthalic acid, glycerol monooleate, glycerol monostearate, 12-hydroxylated stearates, glycerol tristearate, trimethylolpropane tristearate, pentaerythritol tetrastearate, butyl stearate, isobutyl stearate, stearic acid esters, oleic acid esters, behenic acid esters, calcium soap containing esters, isotridecyl stearate, cetyl palmitate, cetyl stearate, stearyl stearate, behenyl behenate, ethylene glycol montanate, glycerol montanate, pentaerythritol montanate and calcium containing montanic acid esters. Of these, an ester of distearyl alcohol and phthalic acid, glycerol monooleate, glycerol monostearate, stearic acid esters and glycerol montanate are preferred. Especially preferred are an ester of distearyl alcohol and phthalic acid, glycerol monostearate and glycerol montanate.

Useful fluoropolymers include polytetrafluoroethylene and vinylidene fluoride copolymers. In one embodiment, the fluoropolymers are present within the slip-coat layer in the form of finely dispersed particles deriving from fluoropolymer powders. The size of these particles or powders is from 0.1 µm to 15 µm and preferably from 0.2 µm to 5.0 µm.

Stability-enhancing agents may optionally be included in the first layer. These agents include those commonly employed in the art such as antioxidants, UV stabilizers, antiozonants, and biostats.

The low-density polyethylene may include those polyethylene resins that are generally characterized by having a density as measured per ASTM D4883 that is less than or equal to 0.92 g/ml, more preferably less than 0.91 g/cc, and even more preferably less than 0.90 g/ml.

In one or more embodiments, the preferred low-density polyethylene resins may be characterized by having the weight average molecular weight of from 20,000 up to 49,999, optionally from 22,000 to 47,000, and optionally from 26,000 to 45,000. In one or more embodiments, the low-density polyethylene resin may be characterized by having a polydispersity that is less than 12, more optionally less than 11, optionally less than 10, and optionally less than 9.

In one or more embodiments, the low-density polyethylene resins may be characterized by having a melt index that is from 0.01 up to 50 dg/min, optionally from 1 to 45 dg/min, and optionally from 20 to 40 dg/min, per ASTM D-1238 at 190°C and 2.16 kg load.

In one or more embodiments, the low-density polyethylene resins may be characterized by having an intrinsic viscosity that is from 0.10 up to 0.99 dl/g, optionally from 0.40 to 0.95 dl/g, and optionally from 0.60 to 0.90 dl/g per ASTM D1601 and D 4020.

The first layer preferably includes from about 45 to about 75% by weight, preferably from 50 to 70% by weight, and more preferably from 55 to 65% by weight of the polyethylene blend based on the entire weight of the layer.

The polyethylene blend preferably includes from 3 to 97, preferably from 10 to 60, and more preferably from 15 50 percent by weight of the first polyethylene resin based on the entire weight of the polyethylene blend.

The polyethylene blend preferably includes from 3 to 97, preferably from 10 to 80, and more preferably from 15 to 70 percent by weight of the second polyethylene resin based on the entire weight of the polyethylene blend.

The polyethylene blend preferably includes from o to 40, preferably from 3 to 30, and more preferably from 5 to 25 percent by weight of the third polyethylene resin based on the entire weight of the polyethylene blend.

In preferred embodiments, polyethylene blend includes at least 60%, more preferably at least 65%, and even more preferably at least 70% by weight, based on the entire weight of the blend, of the first and second polyethylene resins combined.

The first layer preferably includes from 2.5 to 15 parts by weight, more preferably from 4 to 12 parts by weight, and even more preferably from 6 to 10 parts by weight propylene polymer or copolymer per 100 parts by weight of the polyethylene blend.

The first layer preferably includes from 4.5 to 20 parts by weight, more preferably from 6 to 18 parts by weight, and even more preferably from 8 to 16 parts by weight dynamically vulcanized rubber per 100 parts by weight of the polyethylene blend.

The first layer preferably includes from 0 to 30 parts by weight, more preferably from to 20 parts by weight, and even more preferably from 2 to 15 parts by weight filler per 100 parts by weight of the polyethylene blend.

The first layer preferably includes from 0 to 20 parts by weight, more preferably from 2 to 18 parts by weight, and even more preferably from 3 to 15 parts by weight oil, extender per 100 parts by weight of the polyethylene blend.

The first layer preferably includes from o to 20 parts by weight, more preferably from 1 to 15 parts by weight, and even more preferably from 2 to 12 parts by weight slip aid per 100 parts by weight of the polyethylene blend.

The first layer preferably includes from 0 to 10 parts by weight, more preferably from 0.5 to 7 parts by weight, and even more preferably from i to 6 parts by weight polymeric processing additive per 100 parts by weight of the polyethylene blend.

The first layer preferably includes from 0 to 5 parts by weight, more preferably from 0.1 to 3 parts by weight, and even more preferably from 0.5 to 2 parts by weight stability-enhancing agents per 100 parts by weight of the polyethylene blend.

The first layer preferably includes from o to 10 parts by weight, more preferably from 0.1 to 7 parts by weight, and even more preferably from 1.0 to 5 parts by weight low-density polyethylene per 100 parts by weight of the polyethylene blend.

In one embodiment, a composition for forming the slip-coat layer is prepared by first forming a thermoplastic vulcanizate feed stock that includes the rubber, which is at least partially cured, and the propylene polymer or copolymer resin. The first, second, and third polyethylene resins are subsequently added to the thermoplastic vulcanizate to form the slip-coat composition. In one embodiment, the slip-coat layer can be prepared by extruding the slip-coat composition, preferably in conjunction with the base layer, by using coextrusion techniques.

The polyethylene resins are preferably added to the thermoplastic vulcanizate feed stock after the rubber has been sufficiently cured to achieve phase inversion. As those skilled in the art appreciate, dynamic vulcanization may begin by including a greater volume fraction of rubber than thermoplastic resin. As such, the thermoplastic resin is present as the discontinuous phase. As dynamic vulcanization proceeds, the viscosity of the rubber increases and phase inversion occurs. In other words, the thermoplastic resin phase becomes continuous. In one embodiment, the rubber becomes a discontinuous phase. In another embodiment, a co-continuous morphology or pseudo co-continuous morphology can be achieved where both the rubber and the thermoplastic resin are continuous phases. In one embodiment, the polyethylene resins are added after about 50%, preferably 75%, and more preferably about 90% of the curative is consumed. In preferred embodiments, the polyethylene resins are added after the curative is completely consumed or full cure has been achieved.

In one embodiment, the polyethylene resins are added while the thermoplastic vulcanizate is in its molten state; that is, the thermoplastic vulcanizate is at a temperature sufficient to achieve flow of the thermoplastic resin phase. Preferably, the thermoplastic vulcanizate is maintained in its molten state from the time of dynamic vulcanization until the polyethylene resins are added.

The addition of the polyethylene resins can occur by using a variety of techniques. In one embodiment, each polyethylene resin is sequentially added to the thermoplastic vulcanizate. In other words, the first polyethylene resin may be added, followed by the second polyethylene resin, and ultimately followed by the third polyethylene resin. The order of addition may vary.

Alternatively, the polyethylene resins may be preblended prior to combining them with the thermoplastic vulcanizate. In one embodiment, the first, second, and third polyethylene resins may be melt blended and subsequently added to the thermoplastic vulcanizate. This subsequent addition after melt blending can occur in the liquid (molten) or solid state. Alternatively, solid forms (e.g., pellets) of the first, second, and third polyethylene resins may be preblended or mixed. The subsequent addition of these premixed pellets or powders can occur in the solid or molten state.

Where the blend of polyethylene resins is added to the thermoplastic vulcanizate in the liquid or molten state, the temperature at which the resins are added is in excess of 150°C, preferably from 160°C to 200°C, and even more preferably from 170°C to 190°C. The liquid or molten addition of the polyethylene resins can occur by employing a variety of techniques. For example, a single or twin-screw extruder can be used to add the polyethylene resins (either individually or as a blend) while in the molten state. In one embodiment, where the thermoplastic vulcanizate is prepared in a continuous extruder process, a side extruder downstream of the vulcanization zone can be used to add molten polyethylene resin.

In those embodiments where the polyethylene resin blend (either individually or as a blend) is added in the solid state, various techniques can be employed to add the solid polyethylene resin to the thermoplastic vulcanizate. For example, crammer feeders or pellet feeders can be employed.

In another embodiment, the polyethylene resin blend (either individually or as a blend) can be added to or combined with the ingredients used to prepare the thermoplastic vulcanizates prior to dynamic vulcanization of the rubber. In other words, dynamic vulcanization takes place in the presence of not only the propylene polymer or copolymer but also the polyethylene resin blend. In those embodiments where the polyethylene resin blend is present during dynamic vulcanization, the rubber preferably includes an ethylene-propylene-5-vinyl-2-norbornene and the curative is preferably a silicon-containing curative.

In one or more embodiments, the slip-coat layer can be characterized by having numerous advantageous properties including a relatively low coefficient of friction, improved surface appearance, improved wear resistance, improved UV stability, and less susceptibility to stress whitening.

In certain embodiments, the slip-coat layer is advantageously characterized by exhibiting a kinetic coefficient of friction, per ASTM D1894-99 on glass at room temperature, of less than 0.20, more advantageously less than 0.19, and even more advantageously less than 0.18.

Likewise, certain embodiments of the slip-coat layer are advantageously characterized by exhibiting a static coefficient of friction per ASTM D1894-99 on glass at room temperature, of less than 0.20, more advantageously less than 0.19, and even more advantageously less than 0.18.

Still further, certain embodiments of the slip-coat layer can be advantageously characterized by exhibiting a Shore D hardness of from 30 to 60, advantageously from 35 to 50, and more advantageously from 42 to 47.

Also; certain embodiments of the slip-coat layer are advantageously characterized by exhibiting an improved surface appearance as demonstrated by relatively low extrusion surface ratings (ESR). ESR can be analyzed as described by Ellul et al., in "Chemical Surface Treatments Of Natural Rubber And EPDM Thermoplastic Elastomers: Effects On Friction And Adhesion," RUBBER CHEMISTRY AND. TECHNOLOGY, Vol. 67, No. 4, pg. 582 (1994). Preferably, the slip-coats of certain embodiments of this invention are characterized by having an ESR value (Ra) that is less than 120, advantageously less than 80, and even more advantageously less than 50.

The second layer, which may also be referred to as the substrate or base layer, is preferably prepared from compositions that include at least one polymer characterized by having a glass transition temperature (Tg) that is lower than ambient temperature, preferably less than 0°C, more preferably less than -20°C, and even more preferably less than -65°C. In preferred embodiments, these compositions include at least one rubbery polymer. In one embodiment, these compositions may include one or more rubbery polymers. In other embodiments, these compositions may include one or more block copolymers that include a soft or rubbery segment (*i.e.,* a segment having a glass transition temperature that is less than 0°C). In other embodiments, these compositions may include blends of rubbery polymers together with thermoplastic polymers.

Useful rubbery polymers include natural or synthetic rubbery polymers. Synthetic rubbery polymers include homopolymers of one or more conjugated dienes and copolymers of conjugated dienes and vinyl aromatics such as styrene. Other useful rubbery copolymers include copolymers of ethylene, propylene, and diene monomers. The copolymers include both random copolymers *(e.g.* styrene-butadiene rubber) as well as block copolymer (e.g. styrene-butadiene-styrene block copolymers (S-B-S) and the hydrogenated derivatives thereof (S-E/B-S)). Useful polymeric blends include thermoplastic vulcanizates, which are blends of cured (either fully or partially) rubber and thermoplastic resins. In one embodiment, the thermoplastic vulcanizate includes cured copolymers of ethylene, propylene, and diene monomers dispersed within a continuous poly α-olefin (e.g. polypropylene) phase. In another embodiment, the blends include a poly α-olefin (e.g. polypropylene) and a block copolymer *(e.g.* S-B-S or S-E/B-S). These may include blends of polyolefin with crosslinkable/crosslinked styrenic block copolymers.

Laminates of this invention can be prepared by employing a variety of techniques. In one embodiment, the slip coat and the substrate are co-extruded to form an integral laminate. In other embodiments, the substrate layer is first prepared by using a variety of techniques including molding or extruding, and then the slip coat is subsequently extruded onto the substrate.

Although the invention is not particularly limited to any particular thicknesses of the first and second layers, the thickness of the slip layer in preferred embodiments is from 50 µm to 50 µm, more preferably from 75 µm to 25 µm, and even more preferably from 85 µm to 115 µm. The thickness of the substrate layer can vary greatly depending on the construction of the laminate or the glass run channel.

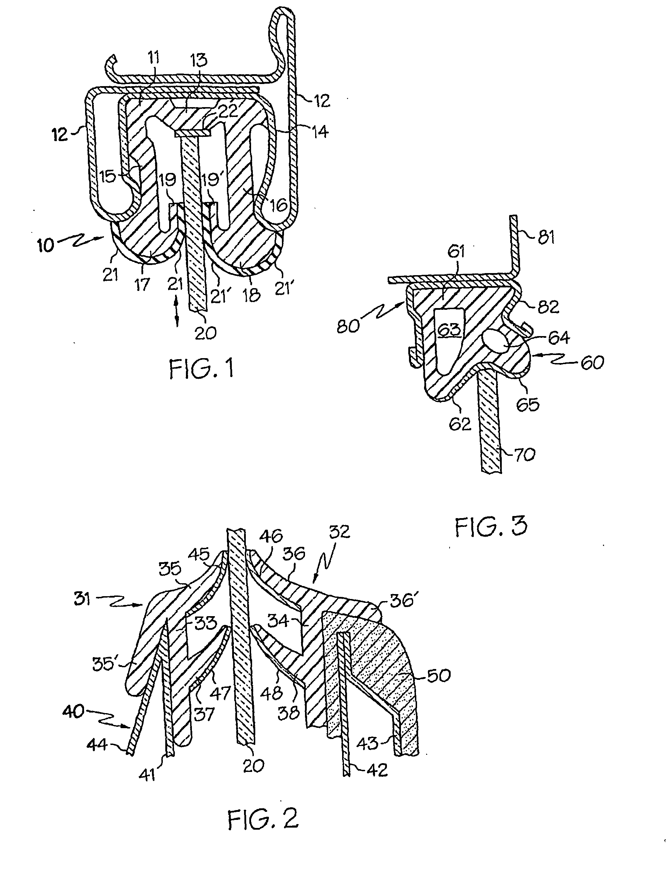

Fig. 1 shows one embodiment of a weatherseal configuration. The weatherseal 10 is positioned within a U-shaped channel 14 of an upper portion 12 of a vehicular door (not shown). Weatherseal 10 includes a body 11 and slip-coating 21. The sides 15 and 16 of body 11 extend downward from an upper portion 13, which may be referred to as a bumper portion because glass 20 will engage bumper portion 13 when in its raised position. Lower ends 17 and 18 of sides 15 and 16 are preferably shaped so that their outer surfaces (relative to the central vertical axis) are fitted snugly against the inner surfaces of channel 14. The inner portions of lower ends 17 and 18 of each side 15 and 16 respectively are shaped so as to present vertical stubs 19 and 19', which are capable of contacting and securing glass 20 therebetween. In preferred embodiments, slip-coating 21 and 21N cover portions of lower ends 17 and 18 of each side 15 and 16. Also, slip-coating 22 covers portions of bumper portion 13, preferably the portion where glass 20 engages bumper portion 13.

Fig. 2 shows another embodiment of a weatherseal configuration. A window glass 20 held between weatherseals 31 and 32. These weatherseals are positioned within horizontal lower walls 41 and 42 of a portion 40 of a vehicular door panel (not shown). Each weatherseal, as installed in the door panel, is a substantially F-shaped mirror image of the other; each includes a vertical portion 33 or 34, respectively, that terminate in upper glass-abutting stubs 35 or 36, respectively. Each weatherseal also includes lower glass-abutting stubs 37 and 38, respectively, below the stubs 35 and 36, respectively. The lower surfaces of the upper stubs 35 and 36 are provided with slip-coatings 45 and 46 respectively; and the lower surfaces of the lower stubs 37 and 38 are provided with slip-coatings 47 and 48 respectively. The door panel 40 is preferably fitted with a complementary weatherseal 50 that is fitted around the walls 42 and 43, respectively, of the outer door panel; and a lower portion 36' of the upper glass-abutting stub 36 snugly overlies the complementary weatherseal 50, anchoring the weatherseal 32. To anchor the weatherseal 31, a lower portion 35' of upper glass-abutting portion 35 snugly overlies inner wall 44 of the door panel 40.

Another embodiment of an upper weatherseal is illustrated in FIG. 3. This weatherseal 60 likewise includes a base 61 and a slip coating 65 covering the lower portion 62 of base 61. Base 61 is adapted to fit securely within a U-channel 82 that is attached to a portion 81 of a vehicular door (not shown). Base 61 also includes through passages 63 and 64. These passages allow base 61 to be compressed by the upper edge of the glass window 70. This weatherseal 60 is useful to seal the periphery of a glass window 70 that does not run in channels. Instead, glass window 70 simply mates with lower portion 62 of weatherseal 60 by contact when glass window 70 is in its raised position.

In order to demonstrate the practice of the present invention, the following examples have been prepared and tested. The examples should not, however, be viewed as limiting the scope of the invention. The claims will serve to define the invention.

### EXAMPLES

### Samples 1-5

Comparative polymeric blends that have been used in the prior art as slip coats for polymeric laminates were prepared as Samples 1-3. Specifically, Sample 1 was prepared by blending 22% by weight of a high-molecular weight polyethylene resin, 56% by weight of a medium-molecular weight polyethylene resin, and 22% by weight of a low-molecular weight polyethylene resin. The blend also included % by weight of a carbon black/polyethylene concentrate. This comparative example is similar to that taught by U.S. Patent No. 5,110,685.

The high-molecular weight polyethylene resin was obtained under the tradename HD™ 7745 (ExxonMobil) and as was characterized by having an intrinsic viscosity of 2.81 dl/g, a weight average molecular weight of 125,000, and a melt index of 0.045 dg/min. The medium-molecular weight polyethylene resin was obtained under the tradename HD™ 6706 (ExxonMobil) and was characterized by having an intrinsic viscosity of 1.20 dl/g, a weight average molecular weight of 60,000, and a melt index of 6.7 dg/min. The low-molecular weight polyethylene resin was obtained under the tradename HD™ 6733 (ExxonMobil) and was characterized by having an intrinsic viscosity of 0.78 dl/g, a weight average molecular weight of 40,000, and a melt index of 33 dg/min. These characteristics, as well as the similar characteristics reported throughout this Experimental Section, were determined as follows. Intrinsic viscosity was determined according to ASTM D1601 and D4020, where the samples were dissolved in decahydronaphthalene at 150°C and reflux times were measured at 135°C in triplicate using a Ubbelohde viscometer. The weight average molecular weight was determined by GPC analysis with polystyrene standards using an automatic, heated, self-contained Waters 150 C GPC unit. The melt index was determined according to ASTM D1238 at 190°C and 2.1 kg load. The carbon black/polyethylene concentrate included 40% by weight carbon black and 60% by weight polyethylene that was characterized by a number average molecular weight of 40,000 g/mole and a density that was less than 0.92 g/ml. This carbon black/polyethylene concentrate was obtained under the tradename AMPACET™ 19470 (Ampacet).

Sample 2 was similar to Sample 1 except that an ethylene-propylene rubber was added. Specifically, the sample included 30% by weight ethylene-propylene rubber, 7% by weight of the carbon black/polyethylene concentrate, and 63% by weight of a polyethylene blend. The polyethylene blend included 32% by weight of the high-molecular weight polyethylene, 52% by weight of the medium-molecular weight polyethylene, and 16% by weight of the low-molecular weight polyethylene based upon the total weight of the polyethylene blend. The high, medium, and low molecular weight polyethylene resins were the same as those employed in Sample 1. The polymeric blend of Sample 2 was likewise similar to that disclosed in U.S. Patent No. 5,110,685.

Sample 3 included a polymeric blend similar to that disclosed in U.S. Patent No. 6,146,739. Specifically, the blend included 61% by weight of a polyethylene blend; 2% by weight of an amide slip aid, 2% by weight of a silicone slip aid, 7% by weight of the carbon black/polyethylene concentrate, and 28% by weight of a thermoplastic vulcanizate.

The polyethylene blend included 31% by weight of a high-molecular weight polyethylene resin, 47% by weight of a medium-molecular weight polyethylene resin, 12% by weight of a low-molecular weight polyethylene resin, and 10% by weight of an ultrahigh molecular weight polyethylene resin based upon the total weight of the polyethylene blend. The high, medium, and low molecular weight resins were the same as those employed in Samples 1 and 2. The ultrahigh molecular weight polyethylene resin was characterized by having an intrinsic viscosity of 12.36 dl/g and a weight average molecular weight of 1,600,000 g/mole.

The amide slip aid was obtained under the tradename KEMAMIDE™ E, which included 98% by weight of Erucamide (z-13-docosenamide), and the silicone slip aid was obtained under the tradename MB™ 50-313 (Dow Corning), which includes 30 to 60% by weight silicone dispersed within an octene/ethylene polymer.

The thermoplastic vulcanizate was prepared by dynamically vulcanizing a rubber within a blend that included a thermoplastic resin. The dynamic vulcanization procedure was similar to that described in U.S. Patent No. 4,594,390. The recipe included 190 parts by weight of an oil-extended olefinic elastomeric copolymer (this amount includes 100 parts by weight rubber and 90 parts by weight oil), 64 parts by weight of a thermoplastic polypropylene homopolymer, 174 total parts by weight paraffinic oil (135 parts including the 90 parts inclusive with the rubber), 12 parts by weight clay, 5.3 parts by weight phenolic resin, 2 parts by weight zinc oxide, and 22.6 parts by weight carbon black/polypropylene concentrate (40% by weight carbon black and 60% by weight polypropylene), 1.26 parts by weight stannous chloride. The elastomeric copolymer was poly(ethylene-*co*-propylene-*co*-5-ethylidene-2-norbornene) obtained under the tradename VISTALON™ 4779 (ExxonMobil), the thermoplastic polypropylene homopolymer was obtained under the tradename ADSYL 5C 30F (Bassell), the phenolic resin was obtained under the tradename SP-1045, and the carbon black/polypropylene blend was obtained under the tradename Ampacet 49974™ (Ampacet).

These comparative examples are identified in Table I together with various physical and performance properties that were observed from tests that were performed on extrudates of the compositions.

Samples 4 and 5 were prepared in accordance with the teachings of this invention. Specifically, these polymeric blends included 30% by weight of a thermoplastic vulcanizate together with a polyethylene blend that included a high-molecular weight polyethylene resin, a medium-molecular weight polyethylene resin, and a low-molecular weight polyethylene resin. The high, medium, and low molecular weight polyethylene resins employed in Samples 4 and 5 were the same as those employed in Samples 1-3. Each of the polymeric blends also included 7% by weight of the carbon black/polyethylene concentrate employed in Samples 1-3. Sample 4 included 2% by weight of the amide slip aid and 2% by weight of the silicone slip aid, which were also used in Sample 3. Accordingly, Sample 4 included 59% by weight of the polyethylene blend, and Sample 5 included 63% by weight of the polyethylene blend.

The thermoplastic vulcanizates that were employed in Samples 4 and 5 were the same as the thermoplastic vulcanizate employed in Sample 3. This particular thermoplastic vulcanizate is identified as TPV I in this Experimental Section.

**TABLE I**

| **Samples** | **1** | **2** | **3** | **4** | **5** |
|---|---|---|---|---|---|
| | | | | | |

| **Components (% by weight)** | | | | | |
|---|---|---|---|---|---|
| Polyethylene Blend | 93 | 63 | 61 | 63 | 59 |
| EPR | --- | 30 | --- | --- | --- |
| TPV I | 0 | 0 | 28 | 30 | 30 |
| TPV II | 0 | 0 | 0 | 0 | 0 |
| Slip Aid | 0 | 0 | 4 | 0 | 4 |
| Carbon Black/Polyethylene Concentrate | 7 | 7 | 7 | 7 | 7 |

| **Physical/Performance Characteristics** | | | | | |
|---|---|---|---|---|---|
| Specific Gravity | 0.957 | 0.935 | n/a | 0.953 | 0.951 |
| Shore D | 56 | 42 | 47 | 45 | 41 |
| Ultimate Tensile Strength (MPa) | 12.52 | 8.246 | n/a | 19.78 | 7.750 |
| Ultimate Elongation (%) | 100 | 1121 | n /a | 891 | 883 |
| LCR Viscosity | 200 | 283 | n/a | 183 | 146 |
| ESR | 27 | 55 | 130 | 42 | 28 |
| Static COF | 0.125 | 0.214 | 0.146 | 0.178 | N/a |
| Kinetic COF | 0.137 | 0.260 | 0.119 | 0.191 | 0.263 |

Shore hardness was determined according to ISO 868, which is similar to ASTM D-2240. Ultimate tensile strength, ultimate elongation, and 100% modulus were determined according to ISO 527, which is similar to ASTM D-412 at 23EC by using an Instron testing machine. The extrusion surface roughness (ESR) was determined as described by Ellul et al., in "Chemical Surface Treatments Of Natural Rubber And EPDM Thermoplastic Elastomers: Effects On Friction And Adhesion," RUBBER CHEMISTRY AND TECHNOLOGY, Vol. 67, No. 4, pg. 582 (1994). LCR Viscosity is measured with a Dynisco™ Capillary rheometer at 30:1 length/diameter at 1200s⁻¹ at 204°C. Static and kinetic COF was determined substantially in accordance with ASTM D1894-99 by using a Thwing-Albert Friction/Peel Tester Model 225.1.

The data in Table I shows that the addition of the thermoplastic vulcanizate to a polymeric blend of three distinct polyethylenes softens that blend, which is advantageous for use as a weather seal. This softening occurs without a deleterious impact on the coefficient friction. Notably, while the addition of ethylene-propylene rubber in Sample 2 softened the polyethylene blend (compared to Example 1), the coefficient of friction deleteriously increased as compared to Sample 4. Also, the data in Table I shows that the absence of the ultra-high molecular weight polyethylene resin provides better surface appearance. Namely, when Samples 3 and 5 are compared, the extrusion surface rating of Sample 3 is markedly higher than Sample 5 yet both samples demonstrate comparable coefficient of friction.

### Samples 6-12

Seven additional polymeric blends were prepared and extruded profiles of these blends were tested for various physical and performance properties. As set forth in Table II, the ratio of the various polyethylene components (e.g., the high, medium, and low molecular weight polyethylene resins) was varied. All other constituents within the blends were held at a constant. The values that are provided in Table II for each polyethylene resin are based on a percent by weight of the polyethylene blend component of the composition. The overall polymeric blend included 62% by weight of the polyethylene blend, 7% by weight of a carbon black/polyethylene concentrate, and 27% by weight of a thermoplastic vulcanizate. The carbon black/polyethylene concentrate was the same as used in Samples 1-5. The thermoplastic vulcanizate, which is designated TPV II, was cured using a silicon-hydride cure system. Specifically, the recipe included 200 parts by weight of an oil-extended olefinic elastomeric copolymer (this amount includes 100 parts by weight rubber and 100 parts by weight oil), 50 parts by weight thermoplastic polypropylene homopolymer, 168 total parts by weight paraffinic oil (160 parts including the 100 parts inclusive with the rubber), 42 parts by weight clay, 2 parts by weight silicon hydride, 0.004017 parts by weight platinum catalyst, 1 part by weight calcium stearate, and 0.5 parts by weight antioxidant. The elastomeric copolymer was poly(ethylene-co-propylene-co-5-vinyl-2-norbornene), which was obtained under the tradename VISTALON™ 1696 (ExxonMobil), the thermoplastic polypropylene homopolymer was obtained under the tradename EQUISTAR™ 51S07A, which was characterized by a melt index of about 0.6-1.0, the silicon hydride was obtained under the tradename 2-5084 (Dow), the platinum catalyst was obtained under the tradename UCT 300 Catalyst (United Chemical Technologies), and the antioxidant was obtained under the tradename IRGANOX™ 1010.

**TABLE II**

| **Samples** | **6** | **7** | **8** | **9** | **10** | **11** | **12** |
|---|---|---|---|---|---|---|---|
| | | | | | | | |
| Polyethylene Blend | | | | | | | |
| High (% of PE blend) | 11 | 11 | 55 | 55 | 55 | 55 | 32 |
| Medium (% of PE blend) | 73 | 52 | 45 | 23 | 11 | 34 | 52 |
| Low (% of PE blend) | 16 | 37 | 0 | 23 | 34 | 11 | 16 |

| **Physical/Performance Characteristics** | | | | | | | |
|---|---|---|---|---|---|---|---|
| Specific Gravity | 0.964 | 0.963 | 0.965 | 0.963 | 0.965 | n/a | 0.979 |
| Shore D | 44 | 43 | 46 | 44 | 43 | 45 | 44 |
| Ultimate Tensile Strength (MPa) | 11.68 | 11.36 | 22.84 | 20.94 | 17.14 | 18.62 | 7.45 |
| Ultimate Elongation (%) | 882 | 999 | 878 | 828 | 793 | 773 | 885 |
| LCR Viscosity | 163 | 143 | 203 | 178 | 166 | 191 | 171 |
| ESR | n/a | n/a | n/a | n/a | n/a | n/a | 103 |
| Static COF | 0.231 | 0.195 | 0.209 | 0.195 | 0.234 | 0.16 | 0.181 |
| Kinetic COF | 0.226 | 0.239 | 0.204 | 0.243 | 0.283 | 0.174 | 0.170 |

The data in Table II shows that technologically useful slip coats having an advantageous coefficient of friction together with advantageous mechanical properties can be obtained when the high, medium, and low molecular weight resins are employed in amounts consistent with teachings of this invention.

## Claims

1. A polymeric laminate comprising:
(A) a substrate; and
(B) a slip layer covering at least a portion of said substrate, where the slip layer consists essentially of
(i) a polyethylene blend, where said blend includes
(a) from 3 to 97 percent by weight, based upon the total weight of said blend, of a first polyethylene resin having a weight average molecular weight from 110,000 to 140,000 and a polydispersity of less than 12,
(b) from 3 to 97 percent by weight, based upon the total weight of said blend, of a second polyethylene resin having a weight average molecular weight from 50,000 up to 109,999 and a polydispersity of less than 12, and
(c) from o to 40 percent by weight, based upon the total weight of said blend, of a third polyethylene resin having a weight average molecular weight from 20,000 up to 49,999 and polydispersity of less than 12, With the proviso that said blend includes at least 60 percent, based upon the total weight of said blend, of said first polyethylene and said second polyethylene combined;
(ii) from 2.5 to 15 parts by weight, per 100 parts by weight of said polyethylene blend, of a propylene polymer or copolymer having propylene units deriving from propylene monomer; and
(iii) from 4.5 to 20 parts by weight, per 100 parts by weight of said polyethylene blend, of a dynamically vulcanized rubber.

2. The laminate of claim 1, where said polyethylene blend includes (a) from 10 to 60 percent by weight of said first polyethylene resin, (b) from 10 to 80 percent by weight of said second polyethylene resin, and (c) from 3 to 30 percent by weight of said third polyethylene resin, where the weight percent is based upon the total weight to said polyethylene blend.

3. The laminate of claim 1, where said polyethylene blend includes (a) from 15 to 50 percent by weight of said first polyethylene resin, (b) from 15 to 70 percent by weight of said second polyethylene resin, and (c) from 5 to 25 percent by weight of said third polyethylene resin, where the weight percent is based upon the total weight to said polyethylene blend.

4. The laminate of claim 1, where said slip layer consists essentially of (i) said polyethylene blend; (ii) from 4 to 12 parts by weight of said propylene polymer or copolymer; (iii) from 6 to 18 parts by weight of said dynamically-vulcanized rubber; (iv) from o to 30 parts by weight of a filler, (v) from o to 20 parts by weight of a slip aid, (vi) from o to 20 parts by weight of an oil, (vii) from o to 10 parts by weight of a polymeric processing additive, (viii) from 0 to 10 parts by weight of a stability-enhancing agent, and (ix) from o to 10 parts by weight of a low-density polyethylene, each based on 100 parts by weight of the polyethylene blend.

5. The laminate of claim 1, where said slip layer consists essentially of (i) said polyethylene blend; (ii) from 6 to 10 parts by weight of said propylene polymer or copolymer; (iii) from 8 to 16 parts by weight of said dynamically-vulcanized rubber; (iv) from 1 to 20 parts by weight of a filler, (v) from 1 to 15 parts by weight of a slip aid, (vi) from 2 to 18 parts by weight of an oil, (vii) from 0.5 to 7 parts by weight of a polymeric processing additive, (viii) from 0.1 to 5 parts by weight of a stability-enhancing agent and (ix) from 0.1 to 7 parts by weight of a low-density polyethylene, each based on 100 parts by weight of the polyethylene blend.

6. The laminate of claim 1, where said first polyethylene resin has an intrinsic viscosity of 2.00 to 5.00 dl/g, said second polyethylene resin has an intrinsic viscosity of from 1.00 up to 1.99 dl/g, and said third polyethylene resin has an intrinsic viscosity of from 0.10 up to 0.99 dl/g.

7. The laminate of claim 1, where said first polyethylene resin has an intrinsic viscosity of from 2.20 to 4.50 dl/g, said second polyethylene resin has an intrinsic viscosity of from 1.20 up to 1.90 dl/g, and said third polyethylene resin has an intrinsic viscosity of from 0.40 up to 0.95 dl/g.

8. The laminate of claim 1, where said first polyethylene resin has a melt index of from 1.0 to 12 dg/min at 21.6 kg load, said second polyethylene resin has a melt index of from 1.1 up to 14 dg/min at 2.16 kg load, and said third polyethylene resin has a melt index of from 15 up to 50 dg/min at 2.16 kg load per ASTM D-1238.

9. The laminate of claim 1, where said first polyethylene resin has a density that is greater than 0.93 g/ml, said second polyethylene resin has a density that is greater than 0.93 g/ml, and said third polyethylene resin has a density that is greater than 0.93 g/ml.

10. The laminate of claim 1, where said thermoplastic resin is a crystalline or crystallizable polypropylene, and where said dynamically-vulcanized rubber includes a terpolymer of ethylene, propylene, and at least one diene.

11. The laminate of claim 5, where said slip aid is selected from the group consisting of siloxane polymers, fatty acids, fatty acid triglycerides, fatty acid amides, esters, fluoropolymers, graphite, molybdenum, silica, boron nitride, silicon carbide, and mixtures thereof.

12. The laminate of claim 1, where said dynamically-vulcanized rubber is in the form of particles, and where at least 50% of said particles have an average diameter that is less than 5 microns, and where the rubber has a degree of cure where no more than 15 weight percent of the rubber is extractable.

13. The laminate of claim 10, where said diene includes 5-ethylidene-2-norbornene.

14. The laminate of claim 10, where said diene includes 5-vinyl-2-norbotrnene.

15. The laminate of claim 14, where the rubber is dynamically vulcanized by using a silicon-containing curative.

16. A weather seal comprising the laminate of claim 1.

17. A process for manufacturing a laminate, the process comprising:
(I) providing a thermoprocessable composition for forming a substrate;
(II) preparing a thermoprocessable composition for forming a slip coat by
(a) dynamically vulcanizing a rubber within a blend that includes the rubber and a propylene polymer or copolymer to form a thermoplastic vulcanizate, and
(b) adding, after said step of dynamically vulcanizing the rubber, a blend of polyethylene resins to the thermoplastic vulcanizates, where the polyethylene resin blend consists essentially of (i) from 3 to 97 percent by weight, based upon the total weight of said blend, of a first polyethylene resin having a weight average molecular weight of from 110,000 to 140,000 and a polydispersity of less than 12, (ii) from 3 to 97 percent by weight, based upon the total weight of said blend, of a second polyethylene resin having a weight average molecular weight of from 50,000 up to 109,999 and a polydispersity of less than 12, and (iii) from o to 40 percent by weight, based upon the total weight of said blend, of a third polyethylene resin having a weight average molecular weight of from 20,000 up to 49,999 and polydispersity of less than 12, with the proviso that said blend includes at least 60 percent, based upon the total weight of said blend, of said first polyethylene and said second polyethylene combined;
(III) coextruding the composition for forming the substrate and the composition for forming the slip coat, thereby forming a laminate including a substrate and a slip coat covering at least a portion of the substrate.

18. A slip coat composition consisting essentially of:
(i) a polyethylene blend including (a) from 3 to 97 percent by weight, based upon the total weight of said blend, of a first polyethylene resin having a weight average molecular weight of from 110,000 to 140,000 and a polydispersity of less than 12, (b) from 3 to 97 percent by weight, based upon the total weight of said blend, of a second polyethylene resin having a weight average molecular weight of from 50,000 up to 109,999 and a polydispersity of less than 12, and (c) from o to 40 percent by weight, based upon the total weight of said blend, of a third polyethylene resin having a weight average molecular weight of from 20,000 up to 49,999 and polydispersity of less than 12, with the proviso that said blend includes at least 60 percent, based upon the total weight of said blend, of said first polyethylene and said second polyethylene combined;
(ii) a propylene polymer or copolymer; and
(iii) a dynamically-vulcanized rubber.

## Patentansprüche

1. Polymeres Laminat, das
(A) ein Substrat und
(B) eine Gleitschicht umfasst, die mindestens einen Teil des Substrats bedeckt, wobei die Gleitschicht im Wesentlichen aus
(i) einem Polyethylengemisch, wobei das Gemisch
(a) 3 bis 97 Gew.-%, bezogen auf das Gesamtgewicht des Gemisches, von einem ersten Polyethylenharz mit einem durchschnittlichen Molekulargewicht (Gewichtsmittel) von 110.000 bis 140.000 und einer Polydispersität von weniger als 12,
(b) 3 bis 97 Gew.-%, bezogen auf das Gesamtgewicht des Gemisches, von einem zweiten Polyethylenharz mit einem durchschnittlichen Molekulargewicht (Gewichtsmittel) von 50.000 bis 109.999 und einer Polydispersität von weniger als 12, und
(c) 0 bis 40 Gew.-%, bezogen auf das Gesamtgewicht des Gemisches, von einem dritten Polyethylenharz mit einem durchschnittlichen Molekulargewicht (Gewichtsmittel) von 20.000 bis 49.999 und einer Polydispersität von weniger als 12 enthält, mit der Maßgabe, dass das Gemisch mindestens 60 %, bezogen auf das Gesamtgewicht des Gemisches, von dem ersten Polyethylen und dem zweiten Polyethylen in Kombination enthält,
(ii) 2,5 bis 15 Gewichtsteilen von einem Propylenpolymer oder -copolymer mit Propyleneinheiten, die von Propylenmonomer abgeleitet sind, auf 100 Gewichtsteile des Polyethylengemisches und
(iii) 4,5 bis 20 Gewichtsteilen eines dynamisch vulkanisierten Kautschuks auf 100 Gewichtsteile des Polyethylengemisches besteht.

2. Laminat nach Anspruch 1, bei dem das Polyethylengemisch (a) 10 bis 60 Gew.-% des ersten Polyethylenharzes, (b) 10 bis 80 Gew.-% des zweiten Polyethylenharzes und (c) 3 bis 30 Gew.-% des dritten Polyethylenharzes enthält, wobei sich Gewichtsprozent auf das Gesamtgewicht des Polyethylengemisches bezieht.

3. Laminat nach Anspruch 1, bei dem das Polyethylengemisch (a) 15 bis 50 Gew.-% des ersten Polyethylenharzes, (b) 15 bis 70 Gew.-% des zweiten Polyethylenharzes und (c) 5 bis 25 Gew.-% des dritten Polyethylenharzes enthält, wobei sich Gewichtsprozent auf das Gesamtgewicht des Polyethylengemisches bezieht.

4. Laminat nach Anspruch 1, bei dem die Gleitschicht im Wesentlichen aus (i) dem Polyethylengemisch; (ii) 4 bis 12 Gewichtsteilen des Propylenpolymers oder -copolymers; (iii) 6 bis 18 Gewichtsteilen des dynamisch vulkanisierten Kautschuks; (iv) 0 bis 30 Gewichtsteilen eines Füllstoffs, (v) 0 bis 20 Gewichtsteilen eines Gleithilfsmittels, (vi) 0 bis 20 Gewichtsteilen eines Öls, (vii) 0 bis 10 Gewichtsteilen eines polymeren Verarbeitungshilfsmittels, (viii) 0 bis 10 Gewichtsteilen eines Stabilitätsverstärkungsmittels und (ix) 0 bis 10 Gewichtssteilen Polyethylen mit niedriger Dichte besteht, jeweils bezogen auf 100 Gewichtsteile des Polyethylengemisches.

5. Laminat nach Anspruch 1, bei dem die Gleitschicht im Wesentlichen aus (i) dem Polyethylengemisch; (ii) 6 bis 10 Gewichtsteilen des Propylenpolymers oder -copolymers; (iii) 8 bis 16 Gewichtsteilen des dynamisch vulkanisierten Kautschuks; (iv) 1 bis 20 Gewichtsteilen eines Füllstoffs, (v) 1 bis 15 Gewichtsteilen eines Gleithilfsmittels, (vi) 2 bis 18 Gewichtsteilen eines Öls, (vii) 0,5 bis 7 Gewichtsteilen eines polymeren Verarbeitungshilfsmittels, (viii) 0,1 bis 5 Gewichtsteilen eines Stabilitätsverstärkungsmittels und (ix) 0,1 bis 7 Gewichtssteilen Polyethylen mit niedriger Dichte besteht, jeweils bezogen auf 100 Gewichtsteile des Polyethylengemisches.

6. Laminat nach Anspruch 1, bei dem das erste Polyethylenharz eine Strukturviskosität von 2,00 bis 5,00 dl/g hat, das zweite Polyethylenharz eine Strukturviskosität von 1,00 bis 1,99 dl/g hat und das dritte Polyethylenharz eine Strukturviskosität von 0,10 bis 0,99 dl/g hat.

7. Laminat nach Anspruch 1, bei dem das erste Polyethylenharz eine Strukturviskosität von 2,20 bis 4,50 dl/g hat, das zweite Polyethylenharz eine Strukturviskosität von 1,20 bis 1,90 dl/g hat und das dritte Polyethylenharz eine Strukturviskosität von 0,40 bis 0,95 dl/g hat.

8. Laminat nach Anspruch 1, bei dem das erste Polyethylenharz einen Schmelzindex von 1,0 bis 12 dg/Min bei 21,6 kg Last hat, das zweite Polyethylenharz einen Schmelzindex von 1,1 bis 14 dg/Min bei 2,16 kg Last hat und das dritte Polyethylenharz einen Schmelzindex von 15 bis 50 dg/Min bei 2,16 kg Last gemäß ASTM D-1238 hat.

9. Laminat nach Anspruch 1, bei dem das erste Polyethylenharz eine Dichte größer als 0,93 g/ml hat, das zweite Polyethylenharz eine Dichte größer als 0,93 g/ml hat und das dritte Polyethylenharz eine Dichte größer als 0,93 g/ml hat.

10. Laminat nach Anspruch 1, bei dem das thermoplastische Harz ein kristallines oder kristallisierbares Polypropylen ist und der dynamisch vulkanisierte Kautschuk ein Terpolymer von Ethylen, Propylen und mindestens einem Dien enthält.

11. Laminat nach Anspruch 5, bei dem das Gleithilfsmittel aus der Gruppe bestehend aus Siloxanpolymeren, Fettsäuren, Fettsäuretriglyceriden, Fettsäureamiden, Estern, Fluorpolymeren, Graphit, Molybdän, Siliciumdioxid, Bornitrid, Siliciumcarbid und Mischungen davon ausgewählt ist.

12. Laminat nach Anspruch 1, bei dem der dynamisch vulkanisierte Kautschuk in Form von Teilchen vorliegt, und wobei mindestens 50 % der Teilchen einen durchschnittlichen Durchmesser von weniger als 5 µm haben und der Kautschuk einen Härtungsgrad hat, bei dem nicht mehr als 15 Gew.-% des Kautschuks extrahierbar ist.

13. Laminat nach Anspruch 10, bei dem das Dien 5-Ethyliden-2-norbornen enthält.

14. Laminat nach Anspruch 10, bei dem das Dien 5-Vinyl-2-norbornen enthält.

15. Laminat nach Anspruch 14, bei dem der Kautschuk durch Verwendung eines siliciumhaltigen Härtungsmittels dynamisch vulkanisiert ist.

16. Fensterführungs-Dichtung, die das Laminat gemäß Anspruch 1 umfasst.

17. Verfahren zur Herstellung eines Laminats, bei dem
(I) eine thermoverarbeitbare Zusammensetzung zur Bildung eines Substrats bereitgestellt wird;
(II) eine thermoverarbeitbare Zusammensetzung zur Bildung einer Gleitbeschichtung hergestellt wird, indem
(a) ein Kautschuk in einem Gemisch, welches den Kautschuk und ein Propylenpolymer oder -copolymer enthält, unter Bildung eines thermoplastischen Vulkanisats dynamisch vulkanisiert wird, und
(b) nach der Stufe des dynamischen Vulkanisierens des Kautschuks ein Gemisch von Polyethylenharzen zu den thermoplastischen Vulkanisaten gegeben wird, wobei das Polyethylenharzgemisch im Wesentlichen aus (i) 3 bis 97 Gew.-%, bezogen auf das Gesamtgewicht des Gemisches, von einem ersten Polyethylenharz mit einem durchschnittlichen Molekulargewicht (Gewichtsmittel) von 110.000 bis 140.000 und einer Polydispersität von weniger als 12, (ii) 3 bis 97 Gew.-%, bezogen auf das Gesamtgewicht des Gemisches, von einem zweiten Polyethylenharz mit einem durchschnittlichen Molekulargewicht (Gewichtsmittel) von 50.000 bis 109.999 und einer Polydispersität von weniger als 12, und (iii) 0 bis 40 Gew.-%, bezogen auf das Gesamtgewicht des Gemisches, von einem dritten Polyethylenharz mit einem durchschnittlichen Molekulargewicht von 20.000 bis 49.999 und einer Polydispersität von weniger als 12 besteht, mit der Maßgabe, dass das Gemisch mindestens 60 %, bezogen auf das Gesamtgewicht des Gemisches, von dem ersten Polyethylen und dem zweiten Polyethylen in Kombination enthält; (III) die Zusammensetzung zur Bildung des Substrats und die Zusammensetzung zur Bildung der Gleitbeschichtung coextrudiert werden, wodurch ein Laminat gebildet wird, das ein Substrat und eine Gleitbeschichtung enthält, die mindestens einen Teil des Substrats bedeckt.

18. Gleitbeschichtungszusammensetzung, die im Wesentlichen aus:
(i) einem Polyethylengemisch, das (a) 3 bis 97 Gew.-%, bezogen auf das Gesamtgewicht des Gemisches, von einem ersten Polyethylenharz mit einem durchschnittlichen Molekulargewicht (Gewichtsmittel) von 110.000 bis 140.000 und einer Polydispersität von weniger als 12, (b) 3 bis 97 Gew.-%, bezogen auf das Gesamtgewicht des Gemisches, von einem zweiten Polyethylenharz mit einem durchschnittlichen Molekulargewicht (Gewichtsmittel) von 50.000 bis 109.999 und einer Polydispersität von weniger als 12, und (c) 0 bis 40 Gew.-%, bezogen auf das Gesamtgewicht des Gemisches, von einem dritten Polyethylenharz mit einem durchschnittlichen Molekulargewicht von 20.000 bis 49.999 und einer Polydispersität von weniger als 12 enthält, mit der Maßgabe, dass das Gemisch mindestens 60 %, bezogen auf das Gesamtgewicht des Gemisches, von dem ersten Polyethylen und dem zweiten Polyethylen in Kombination enthält;
(ii) einem Propylenpolymer oder -copolymer und
(iii) einem dynamisch vulkanisierten Kautschuk besteht.

## Revendications

1. Stratifié polymère comprenant:
(A) un substrat; et
(B) une couche de glissement couvrant au moins une portion dudit substrat, où la couche de glissement se compose essentiellement
(i) d'un mélange de polyéthylène, où ledit mélange comprend
(a) de 3 à environ 97 pour cent en poids, sur la base du poids total dudit mélange, d'une première résine de polyéthylène ayant un poids moléculaire moyen au poids allant de 110 000 à 140 000 et une polydispersité de moins de 12,
(b) de 3 à 97 pour cent en poids, sur la base du poids total du mélange, d'une deuxième résine de polyéthylène ayant un poids moléculaire moyen au poids de 50 000 à 109 999 et une polydispersité de moins de 12,
(c) de 0 à 40 pour cent en poids, sur la base du poids total du mélange, d'une troisième résine de polyéthylène ayant un poids moléculaire moyen au poids allant de 20 000 à 49 999 et une polydispersité de moins de 12, sous réserve que ledit mélange inclut au moins 60 pour cent, sur la base du poids total du mélange, dudit premier polyéthylène et dudit second polyéthylène combinés;
(ii) de 2,5 à 15 parts en poids, pour 100 parts en poids dudit mélange de polyéthylène, d'un polymère ou d'un copolymère de propylène, ayant des unités de propylène dérivant du monomère de propylène; et
(iii) de 4,5 à 20 parts en poids, par 100 parts en poids du mélange de polyéthylène, d'un caoutchouc vulcanisé par voie dynamique.

2. Stratifié selon la revendication 1, dans lequel ledit mélange de polyéthylène inclut (a) de 10 à 60 pour cent en poids de ladite première résine de polyéthylène, (b) de 10 à 80 pour cent en poids de ladite deuxième résine de polyéthylène, et (c) de 3 à 30 pour cent en poids de ladite troisième résine de polyéthylène, où le pour cent en poids est basé sur le poids total dudit mélange de polyéthylène.

3. Stratifié selon la revendication 1, dans lequel ledit mélange de polyéthylène inclut (a) de 15 à 50 pour cent en poids de ladite première résine de polyéthylène, (b) de 15 à 70 pour cent en poids de ladite deuxième résine de polyéthylène, et (c) de 5 à 25 pour cent en poids de ladite troisième résine de polyéthylène, où le pour cent en poids est basé sur le poids total dudit mélange de polyéthylène.

4. Stratifié selon la revendication 1, dans lequel ladite couche de glissement se compose essentiellement (i) dudit mélange de polyéthylène ; (ii) de 4 à 12 parts en poids dudit polymère ou copolymère de propylène; (iii) de 6 à 18 parts en poids dudit caoutchouc vulcanisé par voie dynamique; (iv) de 0 à 30 parts en poids d'une charge; (v) de 0 à 20 parts en poids d'un adjuvant de glissement; (vi) de 0 à 20 parts en poids d'une huile, (vii) de 0 à 10 parts en poids d'un adjuvant de traitement polymère, (viii) de 0 à 10 parts en poids d'un agent d'amélioration de la stabilité, et de (ix) de 0 à 10 parts en poids d'un polyéthylène basse densité, chacun étant basé sur 100 parts en poids du mélange de polyéthylène.

5. Stratifié selon la revendication 1, dans lequel ladite couche de glissement se compose essentiellement (i) dudit mélange de polyéthylène ; (ii) de 6 à 10 parts en poids dudit polymère ou copolymère de propylène; (iii) de 8 à 16 parts en poids dudit caoutchouc vulcanisé par voie dynamique; (iv) de 1 à 20 parts en poids d'une charge; (v) de 1 à 15 parts en poids d'un adjuvant de glissement; (vi) de 2 à 18 parts en poids d'une huile, (vii) de 0,5 à 7 parts en poids d'un adjuvant de traitement polymère, (viii) de 0,1 à 5 parts en poids d'un agent d'amélioration de la stabilité, et de (ix) de 0,1 à 7 parts en poids d'un polyéthylène basse densité, chacun étant basé sur 100 parts en poids du mélange de polyéthylène.

6. Stratifié selon la revendication 1, dans lequel ladite première résine de polyéthylène a une viscosité intrinsèque de 2,00 à 5,00 dl/g, ladite deuxième résine de polyéthylène a une viscosité intrinsèque de 1,00 à 1,99 dl/g et ladite troisième résine de polyéthylène a une viscosité intrinsèque de 0,10 à 0,99 dl/g.

7. Stratifié selon la revendication 1, dans lequel ladite première résine de polyéthylène a une viscosité intrinsèque de 2,20 à 4,50 dl/g, ladite deuxième résine de polyéthylène a une viscosité intrinsèque de 1,20 à 1,90 dl/g et ladite troisième résine de polyéthylène a une viscosité intrinsèque de 0,40 à 0,95 dl/g.

8. Stratifié selon la revendication 1, dans lequel ladite première résine de polyéthylène a un indice de fusion de 1,0 à 12 dg/minute à une charge de 21,6 kg, ladite deuxième résine de polyéthylène a un indice de fusion de 1,1 à 14 dg/minute à une charge de 2,16 kg, et ladite troisième résine de polyéthylène a un indice de fusion de 15 à 50 dg/minute à une charge de 2,16 kg selon la norme ASTM D-1238.

9. Stratifié selon la revendication 1, dans lequel ladite première résine de polyéthylène a une densité qui est supérieure à 0,93 g/ml, ladite deuxième résine de polyéthylène a une densité qui est supérieure à 0,93 g/ml et ladite troisième résine de polyéthylène a une densité qui est supérieure à 0,93 g/ml.

10. Stratifié selon la revendication 1, dans lequel ladite résine thermoplastique est un polypropylène cristallin ou cristallisable et dans lequel ledit caoutchouc vulcanisé par voie dynamique inclut un terpolymère de l'éthylène, du propylène et d'au moins un diène.

11. Stratifié selon la revendication 5, dans lequel ledit adjuvant de glissement est sélectionné parmi le groupe constitué des polymères de siloxane, des acides gras, des triglycérides d'acides gras, des amides d'acides gras, d'esters, de fluoropolymères, de graphite, de molybdène, de silice, de nitrure de bore, de carbure de silicium et de mélanges de ces derniers.

12. Stratifié selon la revendication 1, dans lequel ledit caoutchouc vulcanisé par voie dynamique est sous la forme de particules, et dans lequel au moins 50% desdites particules ont un diamètre moyen qui est de moins de 5 microns et dans lequel le caoutchouc a un degré de durcissement où non plus de 15 pour cent en poids du caoutchouc sont capables d'être extraits.

13. Stratifié selon la revendication 10, dans lequel ledit diène inclut le 5-éthylidène-2-2-norbornène.

14. Stratifié selon la revendication 10, dans lequel ledit diène inclut le 5-vinyl-2-norbornène.

15. Stratifié selon la revendication 14, dans lequel le caoutchouc est vulcanisé par voie dynamique par utilisation d'un agent de durcissement contenant des silicones.

16. Agent de scellement vis-à-vis des intempéries, comprenant le stratifié selon la revendication 1.

17. Procédé de fabrication d'un stratifié, le procédé comprenant:
(I) la mise à disposition d'une composition capable de traitement thermique en vue de former un substrat;
(II) la préparation d'une composition capable de traitement thermique en vue de former un revêtement de glissement
(a) par vulcanisation par voie dynamique d'un caoutchouc au sein d'un mélange qui inclut le caoutchouc et un polymère ou un copolymère de propylène pour former un produit de vulcanisation thermoplastique, et
(b) par addition, après ladite étape de vulcanisation par voie dynamique du caoutchouc, d'un mélange de résines de polyéthylène aux produits de vulcanisation thermoplastiques, où le mélange de résine de polyéthylène se compose essentiellement (i) de 3 à 97 pour cent en poids, sur la base du poids total dudit mélange, d'une première résine de polyéthylène ayant un poids moléculaire moyen au poids de 110 000 à 140 000 et une polydispersité de moins de 12, (ii) de 3 à 97 pour cent en poids, sur la base du poids total du mélange, d'une deuxième résine de polyéthylène ayant un poids moléculaire moyen au poids de 50 000 à 109 999 et une polydispersité de moins de 12 et (iii) de 0 à 40 pour cent en poids, sur la base du poids total dudit mélange, d'une troisième résine de polyéthylène ayant un poids moléculaire moyen au poids de 20 000 à 49 999 et une polydispersité de moins de 12, sous réserve que ledit mélange inclut au moins 60 pour cent, sur la base du poids total dudit mélange, dudit premier polyéthylène et dudit deuxième polyéthylène combinés;
(III) par co-extrusion de la composition pour former le substrat et la composition pour former le revêtement de glissement, en formant ainsi un stratifié incluant un substrat et un revêtement de glissement couvrant au moins une portion du substrat.

18. Composition de revêtement de glissement constitué essentiellement:
(i) d'un mélange de polyéthylène incluant (a) de 3 à 97 pour cent en poids, sur la base du poids total dudit mélange d'une première résine de polyéthylène ayant un poids moléculaire moyen au poids de 110 000 à 140 000 et une polydispersité de moins de 12, (b) de 3 à 97 pour cent en poids, sur la base du poids total du mélange, d'une deuxième résine de polyéthylène ayant un poids moléculaire moyen au poids de 50 000 à 109 999 et une polydispersité de moins de 12 et (c) de 0 à 40 pour cent en poids, sur la base du poids total dudit mélange, d'une troisième résine de polyéthylène ayant un poids moléculaire moyen au poids de 20 000 à 49 999 et une polydispersité de moins de 12, sous réserve que ledit mélange inclut au moins 60 pour cent, sur la base du poids total dudit mélange, dudit premier polyéthylène et dudit deuxième polyéthylène combinés;
(ii) d'un polymère ou copolymère de propylène; et
(iii) d'un caoutchouc vulcanisé par voie dynamique.
